# EUROPEAN PATENT APPLICATION

(11) **EP 3 890 137 A1**
(43) Date of publication of application: **06.10.2021**
(21) Application number: 19891207.3
(22) Date of filing: 12.11.2019
(51) Int. Cl.: H02J 3/14, B60L 53/30, B60L 53/63, B60L 55/00, B60L 58/12, H02J 7/00

(54) **POWER MANAGEMENT DEVICE, POWER MANAGEMENT METHOD, AND POWER MANAGEMENT SYSTEM**

(30) Priority: 28.11.2018 JP 2018222804
(71) Applicant: Kyocera Corporation, Kyoto-shi, Kyoto 612-8501 (JP)
(72) Inventor: SUZUKI, Yuki, Kyoto-shi, Kyoto 612-8501 (JP); KAKUDA, Yuji, Kyoto-shi, Kyoto 612-8501 (JP)
(74) Representative: TBK
(86) International application number: PCT/JP2019/044264
(87) International publication number: WO 2020/110698

(57) **Abstract**

A power management apparatus manages a facility including a stop space, the stop space including charge-discharge equipment that performs charge and discharge of a storage battery apparatus provided in an electric mobile body. The power management apparatus includes: a receiver configured to receive a permission message indicating that at least one of the charge and discharge of the storage battery apparatus is permitted; a manager configured to manage a remaining storage amount of the storage battery apparatus for which the at least one of the charge and discharge is permitted by the permission message, when the storage battery apparatus is connected to the charge-discharge equipment; and a controller configured to control the charge-discharge equipment for performing the at least one of the charge and discharge of the storage battery apparatus, based on the remaining storage amount of the storage battery apparatus that is managed by the manager. The controller is configured to control the charge-discharge equipment in an adjustment period during which a power of the facility is adjusted.

## Description

### TECHNICAL FIELD

The present invention relates to a power management apparatus and a power management method.

### BACKGROUND ART

In recent years, a technology of suppressing the amount of power flow from a power grid to a facility has been known in order to maintain a power demand and supply balance of the power grid. A technology of using a storage battery apparatus provided in the facility has also been proposed in order to maintain the power demand and supply balance of the power grid (for example, Patent Literatures 1 and 2).

### CITATION LIST

### PATENT LITERATURE

Patent Literature 1: International Publication No. 2015/041010 A1 Pamphlet
Patent Literature 2: International Publication No. 2016/084396 A1 Pamphlet

### SUMMARY OF INVENTION

A power management apparatus according to a first feature manages a facility including a stop space, the stop space including charge-discharge equipment that performs charge and discharge of a storage battery apparatus provided in an electric mobile body. The power management apparatus includes: a receiver configured to receive a permission message indicating that at least one of the charge and discharge of the storage battery apparatus is permitted; a manager configured to manage a remaining storage amount of the storage battery apparatus for which the at least one of the charge and discharge is permitted by the permission message, when the storage battery apparatus is connected to the charge-discharge equipment; and a controller configured to control the charge-discharge equipment for performing the at least one of the charge and discharge of the storage battery apparatus, based on the remaining storage amount of the storage battery apparatus that is managed by the manager. The controller is configured to control the charge-discharge equipment in an adjustment period during which a power of the facility is adjusted.

A power management method according to a second feature is the method for managing a facility including a stop space, the stop space including charge-discharge equipment that performs charge and discharge of a storage battery apparatus provided in an electric mobile body. The power management method includes: receiving a permission message indicating that at least one of the charge and discharge of the storage battery apparatus is permitted; managing a remaining storage amount of the storage battery apparatus for which the at least one of the charge and discharge is permitted by the permission message, when the storage battery apparatus is connected to the charge-discharge equipment; and controlling the charge-discharge equipment for performing the at least one of the charge and discharge of the storage battery apparatus, based on the remaining storage amount of the storage battery apparatus which is managed in managing the remaining storage amount of the storage battery apparatus. The controlling the charge-discharge equipment includes controlling the charge-discharge equipment in an adjustment period during which a power of the facility is adjusted.

A power management system according to a third feature includes: a charge-discharge equipment configured to perform charge and discharge of a storage battery apparatus provided in an electric mobile body; and a power management apparatus configured to manage a facility including a stop space, the stop space including the charge-discharge equipment. The power management apparatus includes: a receiver configured to receive a permission message indicating that at least one of the charge and discharge of the storage battery apparatus is permitted; a manager configured to manage a remaining storage amount of the storage battery apparatus for which the at least one of the charge and discharge is permitted by the permission message, when the storage battery apparatus is connected to the charge-discharge equipment; and a controller configured to control the charge-discharge equipment for performing the at least one of the charge and discharge of the storage battery apparatus, based on the remaining storage amount of the storage battery apparatus that is managed by the manager. The controller is configured to control the charge-discharge equipment in an adjustment period during which a power of the facility is adjusted.

### BRIEF DESCRIPTION OF DRAWINGS

Fig. 1 is a diagram illustrating a power management system 10 according to an embodiment.
Fig. 2 is a diagram illustrating a facility 100 according to the embodiment.
Fig. 3 is a diagram illustrating a power management apparatus 400 according to the embodiment.
Fig. 4 is a diagram illustrating a power management method according to the embodiment.
Fig. 5 is a diagram illustrating the power management method according to a modification example 1.
Fig. 6 is a diagram illustrating the power management method according to a modification example 2.

### DESCRIPTION OF EMBODIMENTS

In recent years, an electric mobile body (for example, an electric vehicle) including a storage battery apparatus has attracted attention, and there has been constructed a stop space (for example, a parking space) including charge-discharge equipment that performs the charge of the storage battery apparatus provided in the electric mobile body.

As a result of a diligent study, the inventors have found that the storage battery apparatus provided in the electric mobile body stopped in the stop space can be used for power management of a facility including the stop space.

Hence, the present disclosure makes it possible to use the storage battery apparatus provided in the electric mobile body stopped in the stop space, for the power management of the facility including the stop space.

In the following, an embodiment will be described with reference to the drawings. Note that in the following description of the drawings, the same or similar parts are designated with the same or similar reference signs.

However, note that the drawings are schematic, and the ratio of dimensions, for example, are sometimes different from the actual dimensions. Therefore, determination has to be made on specific dimensions, for example, considering of the following description. The drawings of course include parts with the different relationship or the different ratio between dimensions.

### [Embodiment]

### (Power Management System)

A power management system according to an embodiment will be described below.

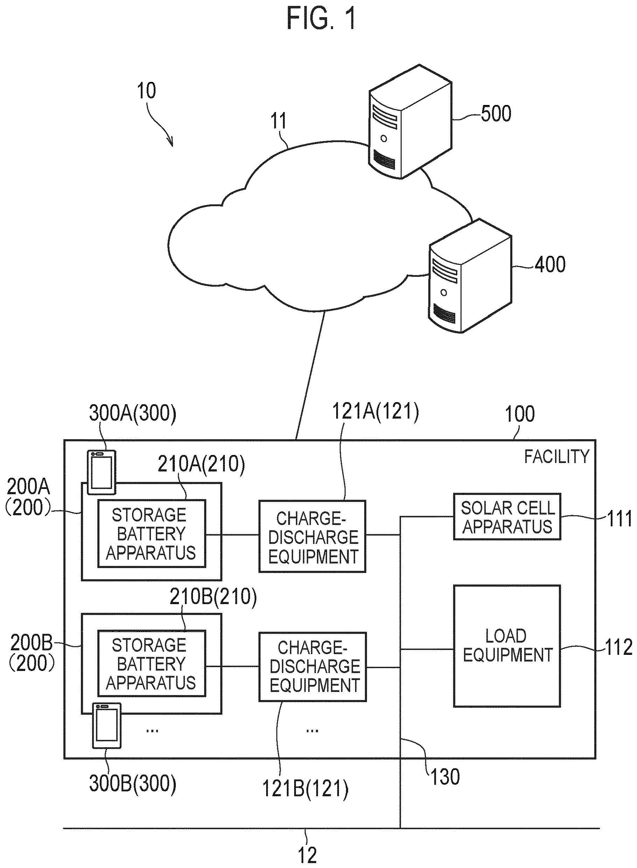

As illustrated in Fig. 1, a power management system 10 includes a facility 100, a power management apparatus 400 and a power management server 500. The facility 100, the power management apparatus 400 and the power management server 500 perform communication through a network 11. For example, the network 11 is the internet. The network 11 may provide a private line such as a virtual private network (VPN).

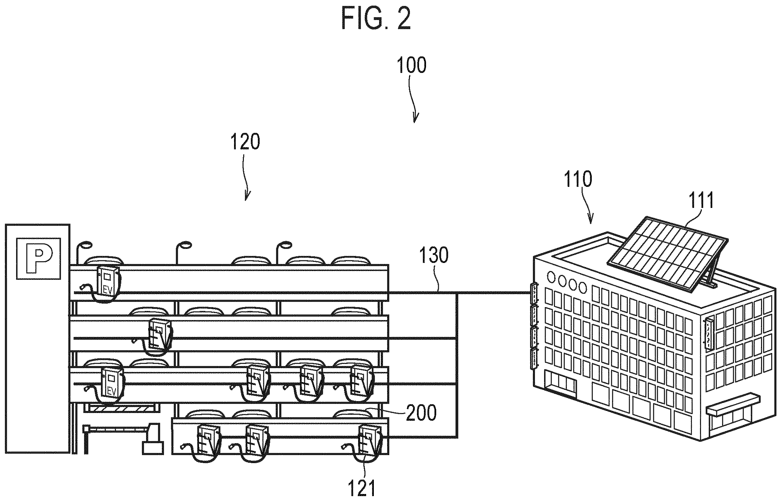

As illustrated in Fig. 1 and Fig. 2, the facility 100 includes a facility main body 110 and a parking space 120. The facility main body 110 may be a commercial facility such as a shop and an office. The parking space 120 is a space where a vehicle is parked. The vehicle includes an electric vehicle 200 having a storage battery apparatus 210. The electric vehicle 200 is an example of the electric mobile body. The electric mobile body is not limited to the vehicle, and only needs to be a mobile body that moves while a human rides in the mobile body, as exemplified by a flying vehicle. As examples of the electric vehicle 200, Fig. 1 illustrates an electric vehicle 200Aincluding a storage battery apparatus 210A and an electric vehicle 200B including a storage battery apparatus 210B.

The facility 100 is connected to a power grid 12. Hereinafter, the flow of power from the power grid 12 to the facility 100 is referred to as power flow, and the flow of power from the facility 100 to the power grid 12 is referred to as reverse power flow.

The facility main body 110 may include a solar cell apparatus 111 and load equipment 112.

The solar cell apparatus 111 is a distributed power supply that generates electricity depending on light such as solar light. A fixed purchase price may be applied to the solar cell apparatus 111. For example, the solar cell apparatus 111 is constituted by a power conditioning system (PCS) and a solar panel.

The load equipment 112 is equipment that consumes power. Examples of the load equipment 112 include air-conditioning equipment, refrigeration equipment, freezing equipment, lighting equipment and audio visual (AV) equipment.

The parking space 120 includes charge-discharge equipment 121 that can be connected with the electric vehicle 200. The parking space 120 is an example of the stop space where the electric mobile body is stopped. The charge-discharge equipment 121 performs the charge and discharge of the storage battery apparatus 210 that is provided in the electric vehicle 200. As examples of the charge-discharge equipment 121, Fig. 1 illustrates charge-discharge equipment 121A and charge-discharge equipment 121B.

In the embodiment, the charge-discharge equipment 121 is connected with the solar cell apparatus 111 and the load equipment 112 through a power line 130. The power line 130 may be a self-supporting power line that is operated by the facility 100.

In the embodiment, a user terminal 300 that is used by a user of the electric vehicle 200 may be used. The user terminal 300 may be a smartphone, a tablet terminal, a personal computer or the like. The user terminal 300 may perform communication with the power management apparatus 400 through the network 11. As examples, Fig. 1 illustrates a user terminal 300A that is used by a user of the electric vehicle 200A and a user terminal 300B that is used by a user of the electric vehicle 200B.

The power management apparatus 400 is an apparatus that manages the facility 100. For example, the power management apparatus 400 manages a power of the power flow and a power of the reverse power flow in the facility 100.

The embodiment exemplifies a case where the power management apparatus 400 performs communication with the facility 100 through the network 11, and the power management apparatus 400 may be provided in the facility 100. Some functions of the power management apparatus 400 may be given by a cloud server that is provided on the internet. That is, it can be thought that the power management apparatus 400 includes the cloud server. The power management apparatus 400 may manage two or more facilities 100.

The power management server 500 is a server that is managed by a power operator such as a power generation operator, a power distribution operator, a retailer or a resource aggregator. The resource aggregator is a power operator that provides the power of the reverse power flow to a power generation operator, a power distribution operator, a retailer and the like in a virtual power plant (VPP). The resource aggregator may be a power operator that generates a surplus power (negawatt power) by reduction in the consumed power of the facility 100 that is managed by the resource aggregator. The surplus power may be regarded as a generated power. The resource aggregator may be a power operator that maintains the power demand and supply balance of the power grid 12 by decrease or increase in the consumed power of the facility 100 that is managed by the resource aggregator (for example, by decrease or increase in the charge power of the storage battery apparatus 210). The power management server 500 is an example of a virtual top node (VTN).

The power management server 500 sends an adjustment message for requesting the adjustment of the demand and supply balance of the power grid 12, to the power management apparatus 400 that manages the facility 100. For example, the power management server 500 may send a power flow control message (for example, demand response (DR)) for requesting the control of the power flow, and may send a reverse power flow control message for requesting the control of the reverse power flow. The degree of the control of the power flow or the reverse power flow may be represented by an absolute value (for example, OOkW), or may be represented by a relative value (for example, OO%). Alternatively, the degree of the control of the power flow or the reverse power flow may be represented by two or more levels. The degree of the control of the power flow or the reverse power flow may be represented by a power rate (real time pricing (RTP)) defined by the current power demand and supply balance, or may be represented by a power rate (time of use (TOU)) defined by the past power demand and supply balance.

In the embodiment, the communication between the power management apparatus 400 and the power management server 500 may be performed according to a predetermined protocol. For example, a protocol conforming to open automated demand response (Open ADR) or an original dedicated protocol can be used as the predetermined protocol.

### (Power Management Apparatus)

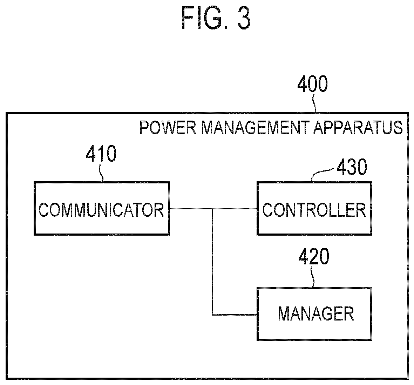

The power management apparatus according to the embodiment will be described below. As illustrated in Fig. 3, the power management apparatus 400 includes a communicator 410, a manager 420 and a controller 430. The power management apparatus 400 is an example of a virtual end node (VEN).

The communicator 410 is constituted by a communication module. The communication module may be a radio communication module conforming to standards such as IEEE802.11a/b/g/n, ZigBee, Wi-SUN, or may be a wire communication module conforming to standards such as IEEE802.3.

The communicator 410 performs communication with the facility 100 through the network 11. The communicator 410 may perform communication with the user terminal 300 through the network 11. The communicator 410 may receive storage battery apparatus information from the charge-discharge equipment 121 provided in the facility 100. The storage battery apparatus information includes the remaining storage amount of the storage battery apparatus 210 connected to the charge-discharge equipment 121. The remaining storage amount of the storage battery apparatus 210 may be detected by the charge-discharge equipment 121. The storage battery apparatus information may include the capacity of the storage battery apparatus 210 connected to the charge-discharge equipment 121. The capacity of the storage battery apparatus 210 may be detected by the charge-discharge equipment 121. The communicator 410 may be an example of a receiver that receives a permission message indicating that the discharge or charge of the storage battery apparatus 210 is permitted, from the user terminal 300.

The manager 420 is constituted by a storage medium including a non-volatile memory and/or an HDD, and manages data regarding the facility 100 that is managed by the power management apparatus 400. For example, the data regarding the facility 100 may include the power of the power flow that is supplied from the power grid 12 to the facility 100, and may include the power of the reverse power flow that is supplied from the facility 100 to the power grid 12. The data regarding the facility 100 may include a power that is reduced in the facility 100 in response to a reduction request (demand response (DR)) for the demand power in the whole of the power grid 12. The data regarding the facility 100 may include the specification (for example, a rated generation power (W)) of the solar cell apparatus 111.

In the embodiment, when the storage battery apparatus 210 is connected to the charge-discharge equipment 121, the manager 420 manages the remaining storage amount of the storage battery apparatus 210 connected to the charge-discharge equipment 121. The manager 420 only needs to manage the remaining storage amount of the storage battery apparatus 210 for which at least one of the charge and the discharge is permitted by the permission message. The manager 420 may manage the capacity of the storage battery apparatus 210 connected to the charge-discharge equipment 121.

The controller 430 may include at least one processor. In various embodiments, the at least one processor may be realized as a single integrated circuit (IC), or may be realized as a plurality of integrated circuits IC and/or discrete circuits connected in a communicable manner. The controller 430 controls each constituent that is provided in the power management apparatus 400.

In the embodiment, the controller 430 controls the charge-discharge equipment 121 for performing at least one of the charge and discharge of the storage battery apparatus 210, based on the remaining storage amount of the storage battery apparatus 210 that is managed by the manager 420. Specifically, the controller 430 controls the charge-discharge equipment 121 in an adjustment period during which the power of the facility 100 is adjusted.

The adjustment period may be a period that is designated by the adjustment message for requesting the adjustment of the demand and supply balance of the power grid. For example, when the adjustment message gives an instruction of the suppression of the power flow from the power grid 12 to the facility 100, the controller 430 may control the charge-discharge equipment 121 to perform the discharge of the storage battery apparatus 210. When the adjustment message gives an instruction of the suppression of the reverse power flow from the power grid 12 to the facility 100, the controller 430 may control the charge-discharge equipment 121 to perform the charge of the storage battery apparatus 210.

The adjustment period may be a period (for example, 30 minutes) during which the power is controlled to be supplied from the power grid 12 to the facility 100 such that the power does not exceed a threshold. For example, there can be a case where the basic rate of the power to be supplied from the power grid 12 to the facility 100 is defined by the cumulative total value of the power to be supplied from the power grid 12 to the facility 100 in the adjustment period. In other words, when the cumulative total value exceeds the threshold in the adjustment period, the basic rate rises. Alternatively, the threshold may be configured by an administrator of the facility 100. The controller 430 may control the charge-discharge equipment 121 to perform the discharge of the storage battery apparatus 210 such that the cumulative value does not exceed the threshold.

When at least one of the charge and discharge of the storage battery apparatus 210 is performed, the controller 430 may give an incentive to the user of the electric vehicle 200. The incentive may include a monetary incentive such as a discount of the price of a product or service purchased in the facility main body 110 and a discount of the usage fee of the parking space 120. The incentive may include the charge of the storage battery apparatus 210 provided in the electric vehicle 200.

The case where the adjustment message gives the instruction of the suppression of the power flow from the power grid 12 to the facility 100 will be described below in further detail.

After the controller 430 controls the charge-discharge equipment 121 to perform the discharge of the storage battery apparatus 210, the controller 430 may control the charge-discharge equipment 121 to perform the charge of the storage battery apparatus 210. The controller 430 controls the charge-discharge equipment 121 to perform the charge of the storage battery apparatus 210 such that the charge power amount of the storage battery apparatus 210 is equal to the discharge power amount of the storage battery apparatus 210. By this configuration, it is possible to eliminate the disadvantage received by the user of the electric vehicle 200.

In this case, the controller 430 may give the timing when the charge of the storage battery apparatus 210 is completed, to the user terminal 300 carried by the user of the electric vehicle 200 that is parked in the parking space 120. By this configuration, it is possible to cause the user to know how long the user needs to stay in the facility main body 110 for avoiding the disadvantage.

### (Power Management Method)

A power management method according to the embodiment will be described below. Here, the case where the adjustment message gives the instruction of the suppression of the power flow from the power grid 12 to the facility 100 will be exemplified.

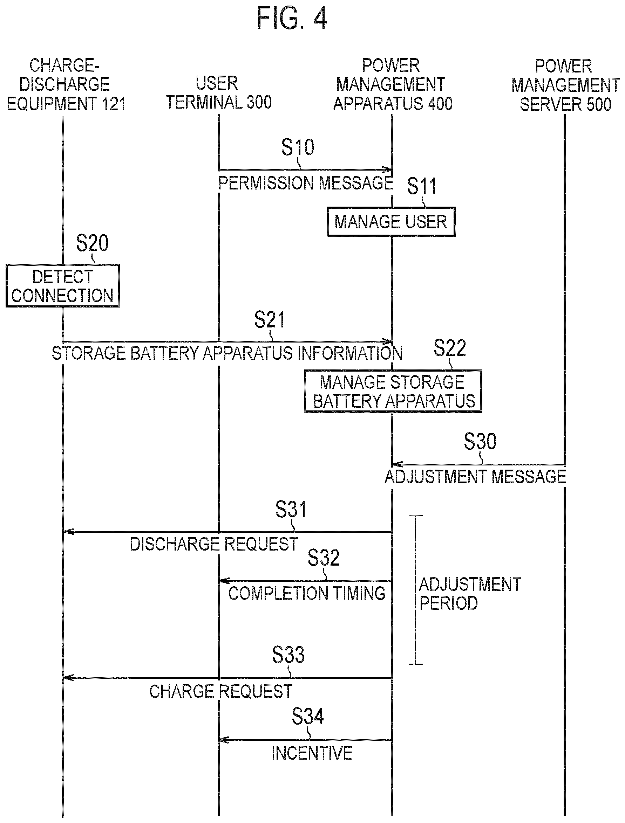

As illustrated in Fig. 4, in step S10, the user terminal 300 sends the permission message for permitting the discharge of the storage battery apparatus 210, to the power management apparatus 400. The permission message includes information for identifying the storage battery apparatus 210 for which the discharge is permitted. The information for identifying the storage battery apparatus 210 only needs to be information that makes it possible to identify the storage battery apparatus 210 when the electric vehicle 200 is parked in the parking space 120. The information for identifying the storage battery apparatus 210 may be at least one of identification information (for example, a number plate) about the electric vehicle 200, identification information about the user of the electric vehicle 200, and a code that can be input to the charge-discharge equipment 121. In the case where the charge-discharge equipment 121 includes a camera, the information for identifying the storage battery apparatus 210 may be information that makes it possible to identify the storage battery apparatus 210 through a pickup image of the camera.

In step S11, the power management apparatus 400 manages the user that permits the discharge. For example, the power management apparatus 400 manages the information for identifying the storage battery apparatus 210 for which the discharge is permitted.

In step S20, the charge-discharge equipment 121 detects the connection of the storage battery apparatus 210 provided in the electric vehicle 200.

In step S21, the charge-discharge equipment 121 sends the storage battery apparatus information to the power management apparatus 400. The storage battery apparatus information includes the remaining storage amount of the storage battery apparatus 210 connected to the charge-discharge equipment 121. The storage battery apparatus information may include the capacity of the storage battery apparatus 210 connected to the charge-discharge equipment 121. Furthermore, the storage battery apparatus information includes the information for identifying the storage battery apparatus 210.

In step S22, the power management apparatus 400 manages the storage battery apparatus 210 connected to the charge-discharge equipment 121. The power management apparatus 400 only needs to manage the storage battery apparatus 210 for which the discharge is permitted by the permission message.

In step S30, the power management server 500 sends the adjustment message to the power management apparatus 400. In Fig. 4, the adjustment message is a message that gives the instruction of the suppression of the power flow from the power grid 12 to the facility 100.

In step S31, the power management apparatus 400 controls the charge-discharge equipment 121 to perform the discharge of the storage battery apparatus 210 in the adjustment period. For example, the power management apparatus 400 sends a discharge request to the charge-discharge equipment 121.

In step S32, the power management apparatus 400 gives the notice of the timing when the charge of the storage battery apparatus 210 is completed (completion timing), to the user terminal 300.

In step S33, the power management apparatus 400 controls the charge-discharge equipment 121 to perform the charge of the storage battery apparatus 210. For example, the power management apparatus 400 sends a charge request to the charge-discharge equipment 121. Here, the power management apparatus 400 may control the charge-discharge equipment 121 to perform the charge of the storage battery apparatus 210 after the lapse of the adjustment period.

In step S34, the power management apparatus 400 gives the incentive due to the discharge of the storage battery apparatus 210, to the user. For example, the power management apparatus 400 sends information regarding the incentive, to the user terminal 300.

In this case, when the charge power amount of the storage battery apparatus 210 is insufficient compared to the discharge power amount of the storage battery apparatus 210, a compensating incentive for the shortfall of the charge power amount may be given to the user.

### (Operation and Effect)

In the embodiment, the power management apparatus 400 manages the remaining storage amount of the storage battery apparatus 210 for which at least one of the charge and the discharge is permitted by the permission message, and controls the charge-discharge equipment 121 for performing at least one of the charge and discharge of the storage battery apparatus 210, based on the remaining storage amount of the storage battery apparatus 210. By this configuration, since the storage battery apparatus 210 is used based on the permission of the user, it is possible to use the storage battery apparatus 210 for the power management of the facility 100, in consideration of the disadvantage of the user.

### [Modification 1]

Modification 1 of the embodiment will be described below. Differences from the embodiment will be mainly described below.

In the embodiment, the power management apparatus 400 receives the permission message before the electric vehicle 200 is parked in the parking space 120. In contrast, in Modification 1, the power management apparatus 400 receives the permission message after the electric vehicle 200 is parked in the parking space 120.

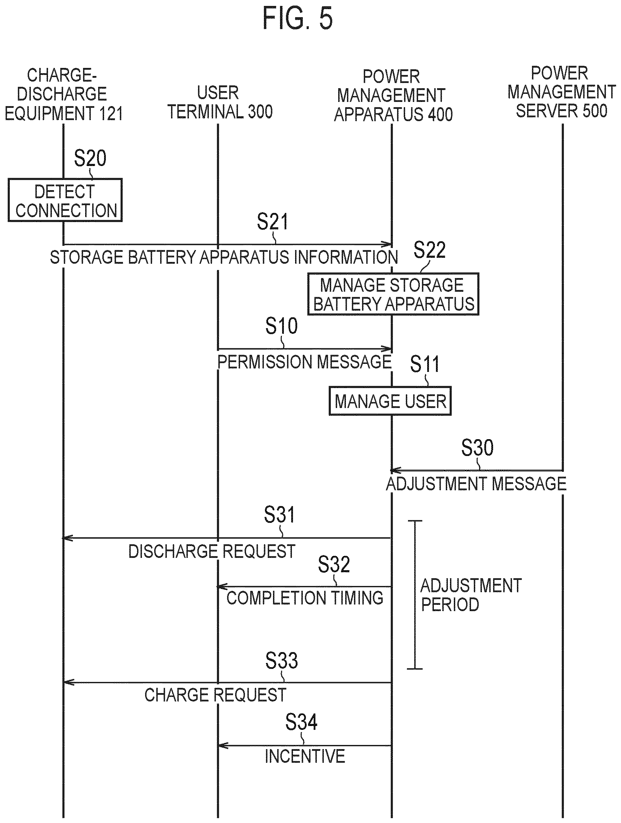

Specifically, as illustrated in Fig. 5, the above-described step S10 and step S11 are performed after the above-described step S20 to step S22. In Fig. 5, the same steps as those in Fig. 4 are denoted by the same step numbers, and therefore, descriptions of the same steps as those in Fig. 4 are omitted.

In this case, the information for identifying the storage battery apparatus 210 for which the discharge is permitted may be the identification information about the charge-discharge equipment 121 to which the storage battery apparatus 210 is connected.

### [Modification 2]

Modification 2 of the embodiment will be described below. Differences from the embodiment will be mainly described below.

In the embodiment, the permission message is sent from the user terminal 300 to the power management apparatus 400. In contrast, in Modification 2, the permission message is sent from the charge-discharge equipment 121 to the power management apparatus 400.

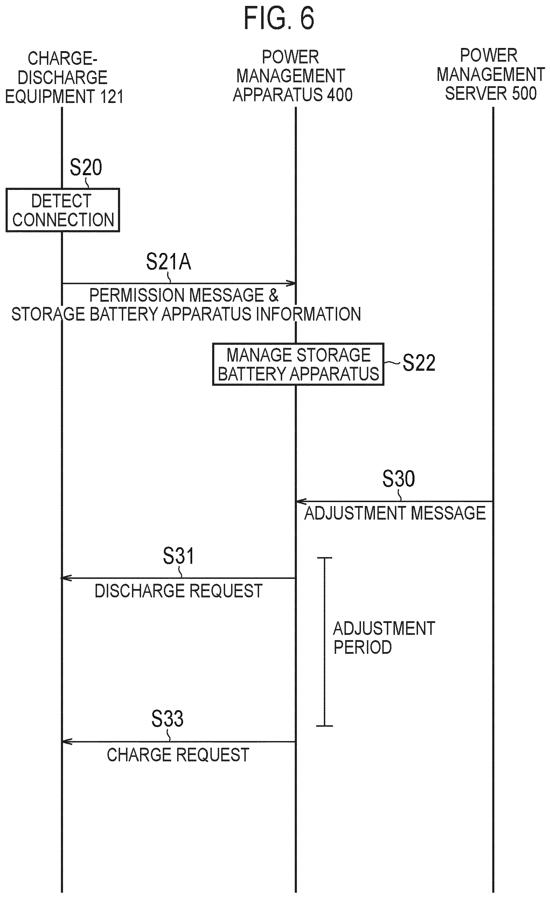

Specifically, as illustrated in Fig. 6, step S21A is performed instead of step S21 illustrated in Fig. 4. The user terminal 300 is not involved, and therefore, step S10, step S11, step S32 and step S34 illustrated in Fig. 4 may be omitted.

In Modification 2, in step S21A, the charge-discharge equipment 121 sends the permission message to the power management apparatus 400, in addition to the storage battery apparatus information. In Fig. 6, the same steps as those in Fig. 4 are denoted by the same step numbers, and therefore, descriptions of the same steps as those in Fig. 4 are omitted.

In this case, the information for identifying the storage battery apparatus 210 for which the discharge is permitted may be the identification information about the charge-discharge equipment 121 to which the storage battery apparatus 210 is connected. This information may be acquired by an input operation to the charge-discharge equipment 121.

### [Modification 3]

Modification 3 of the embodiment will be described below. Differences from the embodiment will be mainly described below.

In Modification 3, the case where the discharge of the storage battery apparatus 210 is performed will be described in further detail. In Modification 3, the power management apparatus 400 controls the charge-discharge equipment 121 to perform the discharge of the storage battery apparatus 210 such that the remaining storage amount of the storage battery apparatus 210 does not fall below a threshold. The threshold may be configured by the user, or may be previously decided. The threshold may be represented by a relative value to the capacity of the storage battery apparatus 210, or may be represented by an absolute value that directly designates the remaining amount of the storage battery apparatus 210.

Furthermore, in the case where the power management apparatus 400 manages information about the home of the user of the electric vehicle 200, the threshold may be configured depending on the distance between the home of the user and the facility 100. In other words, the threshold may be configured based on a power that is necessary for the user to go home from the facility 100.

### [Modification 4]

Modification 4 of the embodiment will be described below. Differences from the embodiment will be mainly described below.

In Modification 4, the power management apparatus 400 estimates the parking time of the electric vehicle 200, based on the timing when the storage battery apparatus 210 is connected to the charge-discharge equipment 121. The power management apparatus 400 controls the charge-discharge equipment 121 based on the estimated parking time. For example, the power management apparatus 400 preferentially selects the storage battery apparatus 210 provided in an electric vehicle 200 that has a long remaining time of the parking time, and controls the charge-discharge equipment 121 such that the charge and discharge of the selected storage battery apparatus 210 are performed.

By this configuration, it is possible to reduce the possibility that the electric vehicle 200 leaves the parking space in the middle of the charge and discharge of the storage battery apparatus 210. Further, in a case where the charge of the storage battery apparatus 210 is completed after the discharge of the storage battery apparatus 210, the possibility that the charge of the storage battery apparatus 210 is completed such that the charge power amount is equal to the discharge power amount increases.

### [Other Embodiments]

The present invention is described using the foregoing embodiment. However, the description and the drawings that are parts of the disclosure should not be interpreted to limit the present invention. A variety of modifications, alterations, embodiments, and operating technologies will be apparent from the disclosure to a person skilled in the art.

Although not particularly mentioned in the embodiment, the facility 100 may include a distributed power supply such as a fuel cell apparatus and a storage battery apparatus. The facility 100 may be a facility in which the parking space is previously assigned to the user by contract or the like.

In the embodiment, the electric vehicle 200 has been exemplified as the electric mobile body, but the embodiment is not limited to this. The electric mobile body only needs to be a mobile body that is driven by the output of the distributed power supply and that moves while a human rides in the mobile body. The electric mobile body may be a flight body (for example, a multicopter or a helicopter) in which a human rides. The electric vehicle 200 may be a four-wheeled vehicle, may be a tricycle, or may be a motorcycle. The motorcycle may include an electrically assisted bicycle. For example, the distributed power supply may be a fuel cell apparatus, and the electric mobile body may be a fuel cell vehicle. In this case, the above-described charge-discharge equipment 121 may be replaced with a hydrogen station. The hydrogen station may include a power port for supplying power through the power line 130.

Although not particularly mentioned in the embodiment, the power management apparatus 400 may receive the permission message when the electric vehicle 200 passes through an entrance of the parking space 120.

Although not particularly mentioned in the embodiment, in the case where the power management apparatus 400 manages two or more facilities 100, the power management apparatus 400 may control at least one of the charge and discharge of the storage battery apparatus 210, as the whole of the two or more facilities 100.

Although not particularly mentioned in the embodiment, the electric vehicle 200 may include a communication function. In this case, the electric vehicle 200 may be regarded as the user terminal 300. For example, the permission message may be sent from the electric vehicle 200 to the power management apparatus 400. Furthermore, the storage battery apparatus information may be sent from the electric vehicle 200 to the power management apparatus 400.

In the embodiment (Fig. 4), the case where the power management apparatus 400 receives the permission message before the electric vehicle 200 is parked in the parking space 120 has been exemplified, and in Modification 1 (Fig. 5), the case where the power management apparatus 400 receives the permission message after the electric vehicle 200 is parked in the parking space 120 has been exemplified. However, the embodiment is not limited to them. When the power management apparatus 400 receives the adjustment message, the power management apparatus 400 may send an inquiry message for inquiring whether to permit at least one of the charge and discharge of the storage battery apparatus 210, and may receive a permission message that is returned in response to the inquiry message.

Although not particularly mentioned in the embodiment, the power management apparatus 400 may give an incentive when the power management apparatus 400 receives the permission message, and may further give an incentive when at least one of the charge and discharge of the storage battery apparatus 210 is actually performed based on the permission message.

Although not particularly mentioned in the embodiment, the power may be an instantaneous power (kW), or may be an integral power consumption (kWh) in a certain period (for example, 30 minutes). For example, a power information message may include an information element indicating the instantaneous power (kW), or may include an information element indicating the integral power consumption (kWh).

The present application claims priory to Japanese Patent Application No. 2018-222804 (filed on November 28, 2018), the entire disclosure of which is incorporated herein by reference.

## Claims

1. A power management apparatus that manages a facility including a stop space, the stop space including charge-discharge equipment that performs charge and discharge of a storage battery apparatus provided in an electric mobile body, the power management apparatus comprising:
a receiver configured to receive a permission message indicating that at least one of the charge and discharge of the storage battery apparatus is permitted;
a manager configured to manage a remaining storage amount of the storage battery apparatus for which the at least one of the charge and discharge is permitted by the permission message, when the storage battery apparatus is connected to the charge-discharge equipment; and
a controller configured to control the charge-discharge equipment for performing the at least one of the charge and discharge of the storage battery apparatus, based on the remaining storage amount of the storage battery apparatus that is managed by the manager, wherein
the controller is configured to control the charge-discharge equipment in an adjustment period during which a power of the facility is adjusted.

2. The power management apparatus according to claim 1, wherein the adjustment period is a period that is designated by an adjustment message for requesting adjustment of demand and supply balance of a power grid.

3. The power management apparatus according to claim 1, wherein the adjustment period is a period during which a power is controlled to be supplied from a power grid to the facility such that the power does not exceed a threshold.

4. The power management apparatus according to any one of claims 1 to 3, wherein the receiver is configured to receive the permission message before the electric mobile body is stopped in the stop space.

5. The power management apparatus according to any one of claims 1 to 3, wherein the receiver is configured to receive the permission message after the electric mobile body is stopped in the stop space.

6. The power management apparatus according to any one of claims 1 to 5, wherein
the controller is configured to:
control the charge-discharge equipment to perform the discharge of the storage battery apparatus when the adjustment message instructs a suppression of power flow from the power grid to the facility; and
control the charge-discharge equipment to perform the charge of the storage battery apparatus after the controller controls the charge-discharge equipment to perform the discharge of the storage battery apparatus.

7. The power management apparatus according to claim 6, wherein the controller is configured to control the charge-discharge equipment to perform the charge of the storage battery apparatus such that a charge power amount of the storage battery apparatus is equal to a discharge power amount of the storage battery apparatus.

8. The power management apparatus according to claim 7, wherein the controller is configured to give a notice of a timing when the charge of the storage battery apparatus is completed, to a user terminal carried by a user of the electric mobile body that is stopped in the stop space.

9. The power management apparatus according to any one of claims 6 to 8, wherein the controller is configured to control the charge-discharge equipment to perform the discharge of the storage battery apparatus such that the remaining storage amount of the storage battery apparatus does not fall below a threshold.

10. The power management apparatus according to any one of claims 1 to 9, wherein the controller is configured to estimate a stop time of the electric mobile body based on a timing when the storage battery apparatus is connected to the charge-discharge equipment, and control the charge-discharge equipment based on the estimated stop time.

11. The power management apparatus according to any one of claims 1 to 10, wherein the controller is configured to give an incentive to a user of the electric mobile body when the at least one of the charge and discharge of the storage battery apparatus is performed.

12. The power management apparatus according to any one of claims 1 to 11, wherein the permission message includes information for identifying the storage battery apparatus.

13. A power management method for managing a facility including a stop space, the stop space including charge-discharge equipment that performs charge and discharge of a storage battery apparatus provided in an electric mobile body, the power management method comprising:
receiving a permission message indicating that at least one of the charge and discharge of the storage battery apparatus is permitted;
managing a remaining storage amount of the storage battery apparatus for which the at least one of the charge and discharge is permitted by the permission message, when the storage battery apparatus is connected to the charge-discharge equipment; and
controlling the charge-discharge equipment for performing the at least one of the charge and discharge of the storage battery apparatus, based on the remaining storage amount of the storage battery apparatus that is managed, wherein
the controlling the charge-discharge equipment includes controlling the charge-discharge equipment in an adjustment period during which a power of the facility is adjusted.

14. A power management system comprising:
a charge-discharge equipment configured to perform charge and discharge of a storage battery apparatus provided in an electric mobile body; and
a power management apparatus configured to manage a facility including a stop space, the stop space including the charge-discharge equipment, wherein
the power management apparatus includes:
a receiver configured to receive a permission message indicating that at least one of the charge and discharge of the storage battery apparatus is permitted;
a manager configured to manage a remaining storage amount of the storage battery apparatus for which the at least one of the charge and discharge is permitted by the permission message, when the storage battery apparatus is connected to the charge-discharge equipment; and
a controller configured to control the charge-discharge equipment for performing the at least one of the charge and discharge of the storage battery apparatus, based on the remaining storage amount of the storage battery apparatus that is managed by the manager, and
the controller is configured to control the charge-discharge equipment in an adjustment period during which a power of the facility is adjusted.
